Europäisches Patentamt

European Patent Office

Office européen des brevets

(19)

(11) Numéro de publication: **0 046 718**
**B1**

(12) **FASCICULE DE BREVET EUROPEEN**

(45) Date de publication du fascicule du brevet: **27.12.84**

(51) Int. Cl.³: **A 01 F 25/20, A 01 D 90/00**

(21) Numéro de dépôt: **81420123.2**

(22) Date de dépôt: **20.08.81**

(54) **Remorque dessileuse mélangeuse distributrice.**

(30) Priorité: **21.08.80 FR 8018428**

(43) Date de publication de la demande:
**03.03.82 Bulletin 82/09**

(45) Mention de la délivrance du brevet:
**27.12.84 Bulletin 84/52**

(84) Etats contractants désignés:
**BE DE GB**

(56) Documents cités:
**FR-A-1 222 979**
**FR-A-2 192 924**
**FR-A-2 331 970**
**FR-A-2 432 832**

(73) Titulaire: **Pradier, Mathieu Pierre**
**4 rue de l'Olivier**
**F-43150 Le Monastier (FR)**

(72) Inventeur: **Pradier, Mathieu Pierre**
**4 rue de l'Olivier**
**F-43150 Le Monastier (FR)**

Courier Press, Leamington Spa, England.

## Description

Cette invention entre dans le cadre des remorques agricoles destinées au dessilage, au chargement, au mélange, au transport et à la distribution des aliments du bétail, plus précisément les machines combinées visant à alimenter les animaux au moyen d'un "plat unique", mélange d'ingrédients divers convenablement dosés en vue de réaliser une alimentation la mieux équilibrée possible, le produit de base le plus important en volume et poids étant constitué par du fourrage ensilé (conservé humide par fermentation à l'abri de l'air, généralement entassé sous des bâches étanches, à l'extérieur des bâtiments), ce fourrage ensilé étant dessilé et chargé mécaniquement par la machine, dans sa propre benne incorporée, dans laquelle s'opère ensuite le mélange mécanisé avec les autres produits, et qui sert ensuite de réserve jusqu'au moment de la distribution aux animaux, opération également mécanisée.

Dans les machines connues destinées à ce travail particulier, très peu combinent les trois fonctions: dessilage-mélange-distribution, alors que la plupart en réalisent deux seulement: dessilage-distribution/óu mélange-distribution. Par ailleurs, sur les machines les plus complètes (capables des trois fonctions: dessilage-mélange-distribution), le mécanisme de mélange utilisé, généralement à base de grosses vis dans fin, ne permet pad d'incorporer à la charge d'ensilage du foin naturel aux brins longs qui a tendance à s'enrouler autour des vis et à bourrer la machine. Ce foin doit au préalable être haché au moyen d'une machine appropriée, d'où investissement supplémentaire pour l'éleveur. D'autre part, la commande mécanique des vis sans fin, grosses et longues, nécessite des mécanismes capables de transmettre de gros efforts, d'où un coût de construction relativement élevé. Quant à la distribution, les machines connues déversent la nourriture dans les auges des animaux, soit à une hauter de un mètre environ au dessus du sol. Cette hauteur de déchargement est insuffisante pour les éleveurs qui alimentent leurs animaux une fois par jour seulement, et remplissent pour cela de grandes trémies, fixes ou mobiles, qui mesurent souvent deux mètres de haut.

Suivant l'invention, une remorque dessileuse-mélangeuse-distributrice comprend les caractéristiques de la revendication1.

La combinaison de moyens, objet de l'invention, permet de résoudre ou de supprimer ces problèmes. La machine, objet de l'invention, est une remorque composée d'un châssis muni de roues à pneumatiques et d'une flèche d'attelage, à l'avant duquel s'articule (côté tracteur), au sommet de poteaux verticaux convenablement étayés, une benne de grande capacité, soutenue à l'arrière par un long vérin télescopique. Cette benne, de largeur constante et de profondeur variable, dont le fond équipé d'un tapis roulant aux barrettes très rapprochées présente un dos d'âne au niveau de l'essieu du châssis (dans sa position la plus basse), porte à l'arrière une fraise de grand diamètre et d'axe horizontal, perpendiculaire à la direction du déplacement. Cette fraise, équipée de couteaux tranchants et de palettes souples, peut être entraînée en rotation dans les deux sens, assurant dans le premier sens les opérations de dessilage et de chargement puis de hachage et de mélange, dans le deuxième sens l'opération d'émiettage lors de la distribution, au moyen de mécanismes animés depuis la prise de force du tracteur.

D'autres mécanismes coopèrent avec la fraise pour qu'elle puisse mener à bien ses diverses fonctions. Une coquille oscillante, articulée autour de l'axe de la fraise, équipée d'une bavette souple s'enroulant autour d'un tube renfort, épouse la forme du silo, reçoit le silage extrait du silo par la fraise et le canalise jusque dans la benne, en servant également de capotage partiel pour la fraise dans les opérations de hachage, de mélange et de distribution. Un volet oscillant, articulé autour de l'axe de la fraise, capote une partie de la fraise pendant l'opération de hachage et de mélange en canalisant les produits introduits, s'escamote pendant l'opération de chargement, en repoussant le contre couteau pour frayer son passage. Un contre couteau escamotable, muni de couteaux tranchants frôlés par ceux de la fraise, retient les matières fibreuses lors de leur introduction par le dessus de la machine, pendant que la fraise les déchiquette et les entraîne dans la benne le long du volet oscillant et de la coquille oscillante, puis s'escamote sous l'action du volet oscillant, lors des opérations de dessilage et de distribution. Un tapis supérieur, muni de barrettes très rapprochées et de raclettes équipées de griffes, traîne vers l'avant, sur le dessus de la masse de silage, les produits projetés vers le haut par la fraise et régularise à une hauteur constante la masse de mélange poussée vers l'arrière par le tapis de fond, lors de l'opération de distribution. Un plancher supérieur recouvre ce tapis en permettant l'introduction facile des ingrédients complémentaires par l'orifice supérieur. Un tapis transversal escamotable permet le déversement latéral du mélange lors de la distribution. Pour cette opération il vient se placer au dessous de la fraise, alors que des volets pivotants empêchent les projections de produit, reçoit le mélange émietté par la fraise et le déverse sur le côté choisi, à la hauteur désirée (par l'action du vérin élévateur de benne). Pendant l'opération de dessilage, ce tapis, relié par des flasques à ses paliers concentriques à l'axe de la fraise, s'escamote en pivotant autour de l'axe de la fraise, et vient se placer au dessus du capotage arrière de la benne, de manière à ne pas accrocher la masse de silage restant au silo.

Les dessins annexés décrivent de manière non limitative la présente invention, dans sa forme préférée pour le prototype, et permettent de mieux saisir les différentes phases de son fonctionnement.

La figure 1 est une coupe longitudinal précisant les repères utilisés pour les différentes parties de la machine.

La figure 2 montre la partie avant en vue de face.

Les autres figures sont des coupes longitudinales de la machine, suivant les configurations prises pour chaque opération, soit:

Fig. 3: début du dessilage-chargement; attaque en dessus de silo.

Fig. 4: dessilage-chargement, 1 passe en cours, la benne descend.

Fig. 5: dessilage-chargement en faible épaisseur, le tracteur recule.

Fig. 6: mélange: introduction, hachage, incorporation du foin dans le silage déjà chargé.

Fig. 7: dechargement-distribution latérale à hauteur normale dans les auges des animaux.

Fig. 8: déchargement-distribution latérale à grande hauteur dans des trémies d'alimentation.

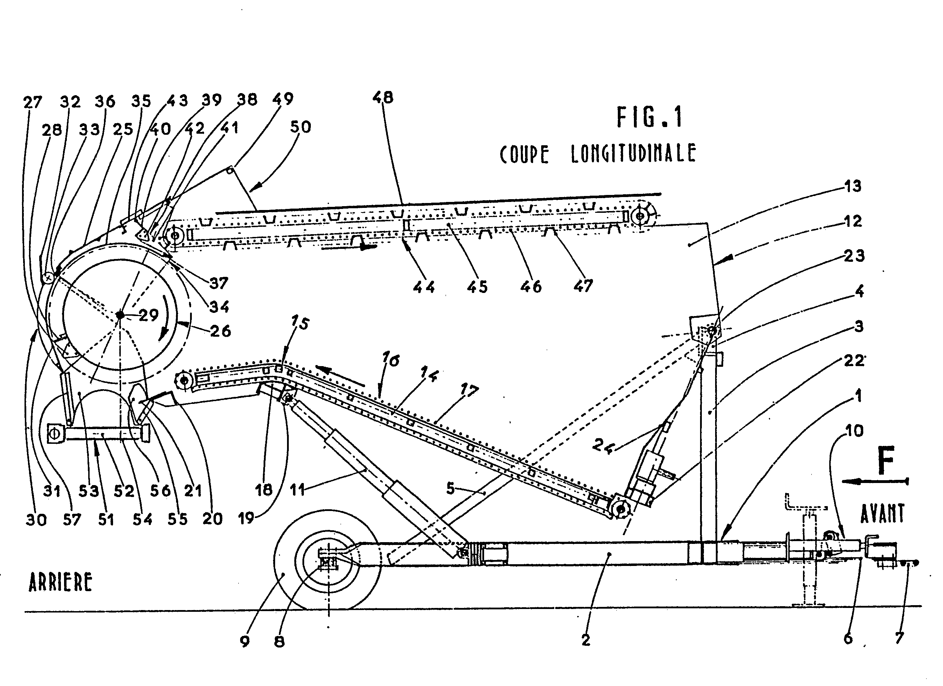

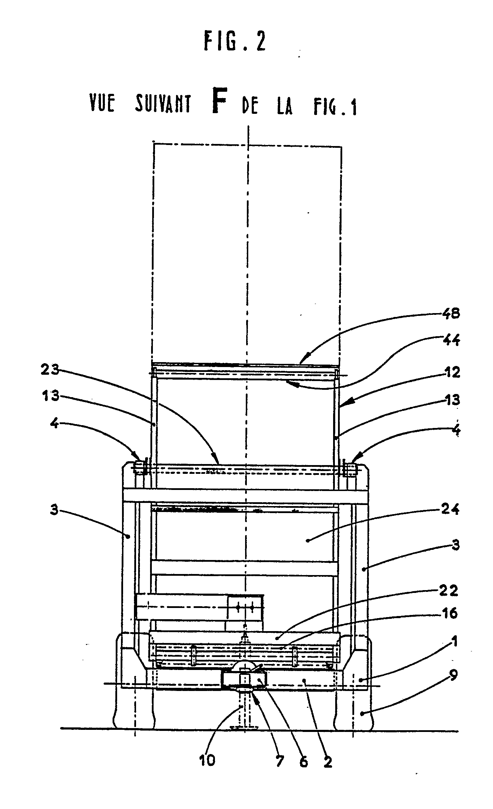

La réalisation pratique, comprend: Fig. 1 et Fig. 2:

— Un châssis 1, comprenant une base plane 2 de forme similaire à la lettre A, composé de caissons clos, deux poteaux 3 en tube carré supportant deux paliers de benne 4, deux bras obliques 5 en tube rectangulaire, munis de marches d'escalier non représentées, prolongé à l'avant par une flèche d'attelage 6 terminée par un anneau pivotant 7;

— Un essieu agraire freiné 8 muni de roues à pneumatiques; 9;

— Une béquille 10 escamotable dans l'épaisseur de la flèche 6;

— Un vérin hydraulique 11 à simple effet, télescopique, destiné à régler la hauteur par rapport au sol de la partie arrière de la benne 12;

— Une benne 12 de largeur constante et de profondeur variable composée de deux flasques 13 de forme appropriée, un fond 14 cintré en 15, muni d'un tapis roulant 16, aux barrettes 17 rondes et très rapprochées, de façon que la produit transporté soit entièrement soutenu et séparé du fond 14, une traverse 18 en fer U et tôle, caissonnée, munie d'une chape 19 pour la tige du vérin 11, une traverse 20 en cornière inégale, équipée d'une raclette réglable 21, un jeu de traverses 22 supportant un mécanisme, une traverse ronde 23 destinée au pivotement de la benne sur les deux paliers de benne 4, une tôle 24 constituant la paroi avant, une tôle arrière 25 munie de raidisseurs, servant à la fois d'entretoise et de capot;

— Une fraise 26 munie de couteaux tranchants 27 et de palettes souples 28, pouvant être mise en rotation dans un sens ou dans l'autre, au moyen de mécanismes connus, suivant le travail désiré, autour de son axe 29 de rotation;

— Une coquille inférieure 30, pivotant autour de l'axe 20 de rotation de la fraise 26, constituée par une tôle cintrée 31 épousant en partie la forme de la fraise 26, fixée entre deux flasques la reliant à ses paliers autour de l'axe 29, une bavette souple 32 fixée sur un tube 33 servant de renfort à la tôle 31, et pouvant s'enrouler autour de ce tube 33, en ayant une longueur telle que, dans cette position, elle ne puisse être accrochée et déchiquetée par la fraise 26;

— Un volet 34 pivotant autour de l'axe 29 de rotation de la fraise 26, constitué par une tôle cintrée 35 épousant en partie la forme de la fraise 26, fixée entre deux flasques la reliant à ses paliers autour de l'axe 29, un fer carré 36 et une cornière 37 servant à raidir l'ensemble;

— Un contre-couteau 38, s'escamotant lors de la montée du volet 34, constitué par une cornière 39 soudée sur un rond 40, deux lames 41 repoussées par la volet 34 lors de sa montée, assurant l'escamotage de l'ensemble, un jeu de couteaux tranchants 42 permettant le déchiquetage des fourrages longs dès leur introduction, en conjugaison avec l'action de la fraise 26;

— Une porte de visite 43 donnant accès au niveau du contre couteau 38 pour des inspections ou des débourrages éventuels;

— Un tapis racleur supérieur 44 comportant une ossature 45, des chaînes et des pignons, des barettes rondes 46 très rapprochées de manière à réaliser une sorte de grille destinée à arrêter les produits projetés vers le haut par la fraise 26, des raclettes 47 régulièrement espacées, munies de griffes appropriées, destinées à niveler le dessus de la masse de fourrage, en traînant à l'extrêmite tout excédent, suivant le sens de rotation du tapis;

— Un plancher 48 servant de plateforme pour l'introduction des ingrédients;

— Un capotage 49 écartant les dangers pour l'opérateur lors de l'introduction des ingrédients dans l'ouverture supérieure 50;

— Un ensemble tapis transversal 51, pivotant autour de l'axe 29 de rotation de la fraise 26, comportant une ossature 52 fixée à deux flasques 53 la reliant à ses paliers autour de l'axe 29, un tapis roulant 54 caoutchouté ou plastifié, un volet articulé 55 muni de deux cames 56 qui lui impriment des mouvements automatiques lors de la manoeuvre de l'ensemble 51, un volet articulé 57 permettant d'obturer l'ouverture arrière lors de l'utilisation du tapis transversal 51;

— Un ensemble de transmissions mécaniques connues, destiné à assurer l'entraînement de toutes les parties mobiles (fraise 26, tapis inférieur 16, tapis supérieur 44, tapis trans-

versal 51), dans le sens voulu et avec la vitesse désirée pour chaque opération.

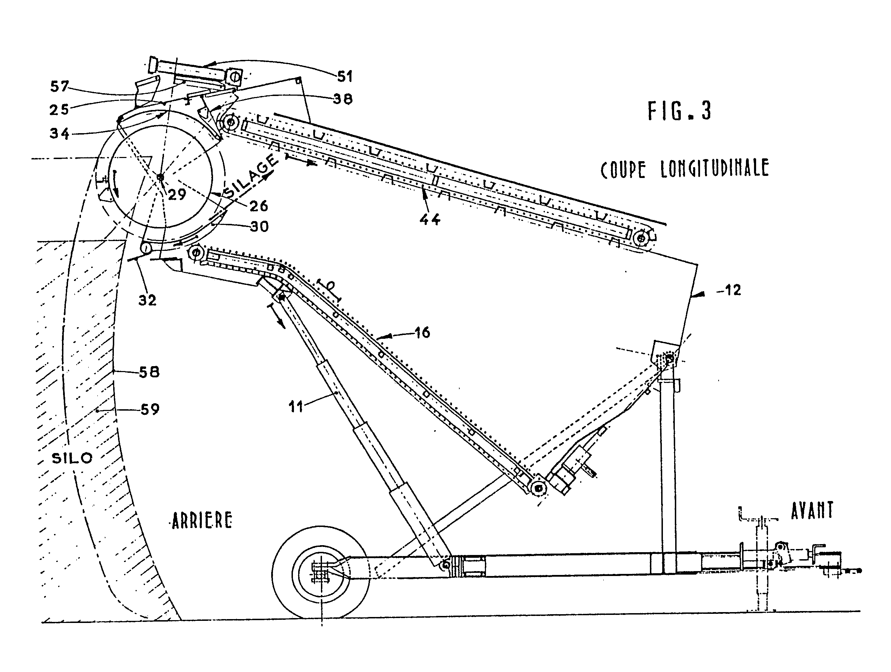

Pour l'opération de dessilage (Fig. 3, Fig. 4, Fig. 5), la machine prend la configuration suivante: Ensemble Tapis Transversal 51 escamoté au dessus du capotage 25 de la fraise, son volet articulé 57 étant replié; volet 34 relevé complètement; contre-couteau 38 escamoté par la montée du volet 34; coquille inférieure 30 on pivotement libre autour de l'axe 29 de la fraise 26 (elle a tendance, dans cette configuration, à tourner dans le sens de la flèche, par son propre poids ou par un système de ressorts, jusqu'à ce que sa bavette souple 32 s'appuie sur le front de taille 58 du silo 59 et en épouse sensiblement les irrégularités); tapis inférieur 16 immobile; tapis supérieur 44 raclant le tas vers l'avant (sens de sa flèche); fraise 26 entraînée en sens inverse d'horloge (suivant la flèche, machine vue conformément au dessin).

Au début de la passe de dessilage (Fig. 3), la machine est reculée près du silo, l'arrière de la benne 12, équipé des organes de travail, est soulevé au dessus de la matière par l'allongement du vérin 11. On recule alors la machine de trente centimètres environ, puis on libère l'huile sous pression dans le vérin, et l'arrière de la benne 12 descend lentement, entraînant avec elle la fraise 26 et les autres organes qui lui sont solidaires.

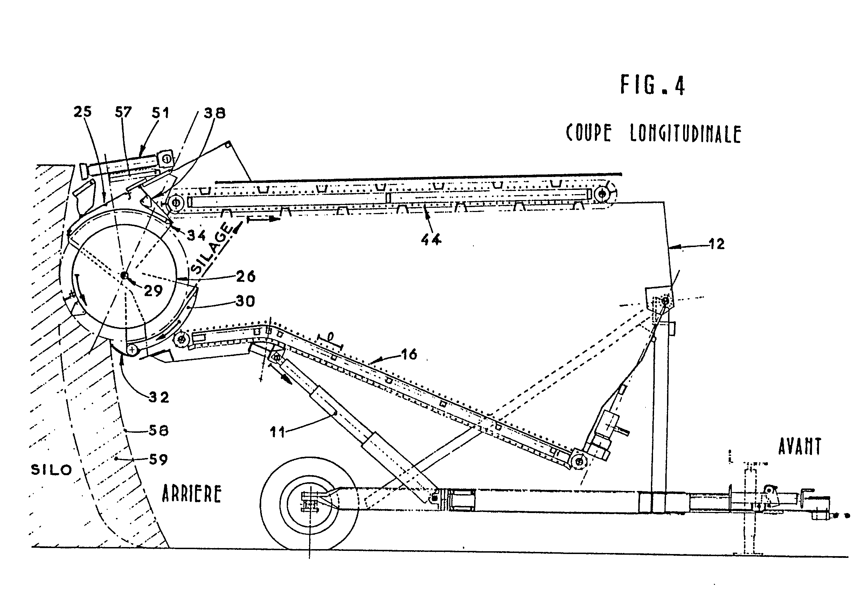

Pendant la passe de dessilage (Fig. 4), alors que la partie arrière de la benne 12 descend, la fraise 26 taille son passage dans le silo, entraîne le silage extrait le long de la coquille oscillante 30 dont la bavette souple 32 plaque sur le front du silo et arrête les projections vers le sol, puis projette ce silage extrait dans la benne ou contre le tapis supérieur 44 qui le traîne alors sur le tas déjà formé jusqu'à l'extrémité de celui-ci.

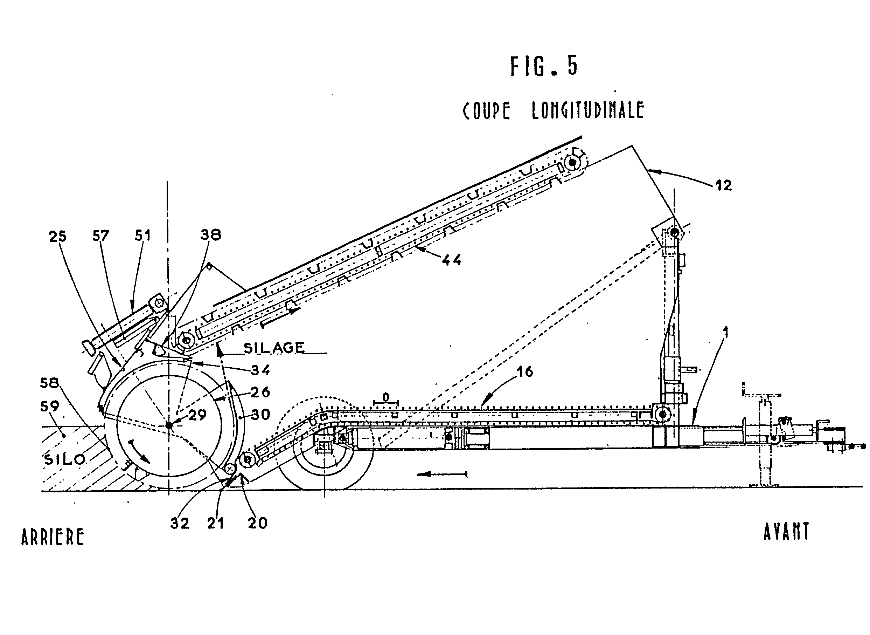

Lorsque la fraise approche du sol (Fig. 5), la coquille oscillante 30 s'escamote par un dispositif mécanique commandé par la descente de la benne 12 par rapport à son châssis 1, de sorte que sa bavette souple 32 vient se loger sur la raclette réglable 21 portée par la traverse 20, ce qui dégage l'extrémité utile de la raclette 21. On peut alors ramasser et charger de petites quantités de silage éparpillé sur le sol au moyen d'une simple marche arrière. La raclette 21 pousse devant elle les brisures qui sont happées et chargées par la fraise, suivant le processus habituel. Ce procédé de chargement peut être utilisé pour évacuer périodiquement les déchets de silage, impropres à la consommation.

Il suffit de réaliser plusieurs passes de dessilage pour charger la benne de la quantité de silage désirée pour une préparation.

On pratique ensuite l'opération de complémentation et mélange, principalement l'incorporation du foin ou autre produit à brins longs.

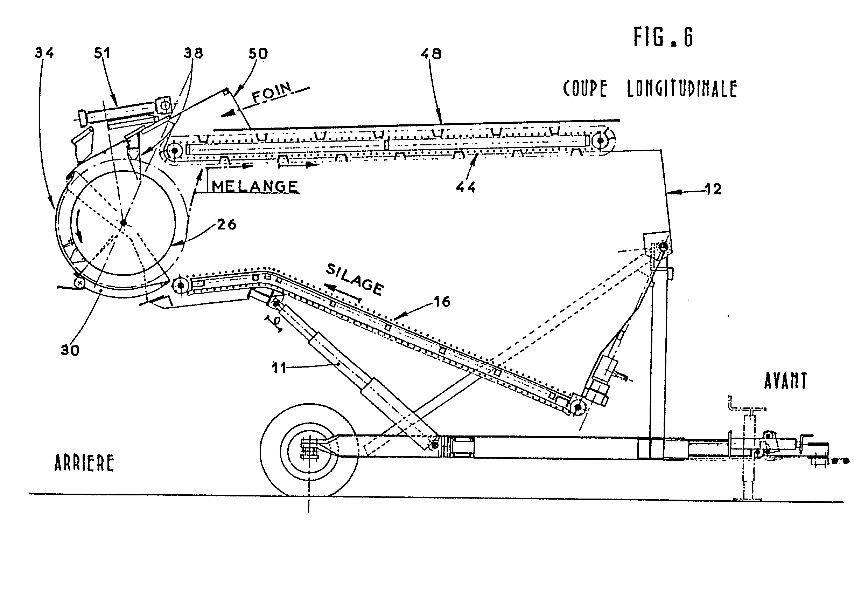

La machine prend alors la configuration de la Fig. 6: volet 34 abaissé à fond, coquille 30 amenée au contact du volet 34 de manière à capoter complètement la fraise 26, contre couteau 38 en position travail (ses couteaux tranchants étant alors situés près de la fraise, à une distance suffisante pour ne pas être accrochés par elle dans sa rotation), tapis inférieur 16 en mouvement vers l'arrière (sens de la flèche), fraise 26 entraînée en sens inverse d'horloge (suivant la flèche, machine vue conformément au dessin), plancher 48 sensiblement horizontal (réglé par l'action du vérin 11 qui agit sur l'ensemble de la benne 12), tapis jeteur 51 en position indifférente (soit en position travail suivant Fig. 1, soit en position escamotée suivant Fig. 6). Les compléments (foin en particulier), d'abord déposés sur le plancher 48, sont introduits progressivement dans l'ouverture 50. Le tapis supérieur 44 les pousse alors vers le contre couteau 38 et la fraise 26. Pendant que le contre-couteau 38 les retient, la fraise 26 déchiquette éventuellement (pour les produits fibreux) les produits puis les entraîne alors à l'intérieur du volet 34 et de la coquille 30, et les rejette dans la benne, vers le haut, en direction du tapis supérieur 44 qui va les entraîner vers l'avant. Simultanément, le tapis inférieur 16 entraîne la masse de silage (ou d'un premier mélange réalisé) vers la fraise 26 qui l'émiette à nouveau et la projette vers le haut en même temps que les produits nouvellement introduits, le tapis supérieur 44 entraînant vers l'avant le mélange formé. Par ce processus, la masse de silage (ou de mélange partiel), contenue dans la benne, est remplacée progressivement par une masse de nourriture complémentée. Il suffit de répéter l'opération pour chaque aliment de base quelques minutes à chaque fois).

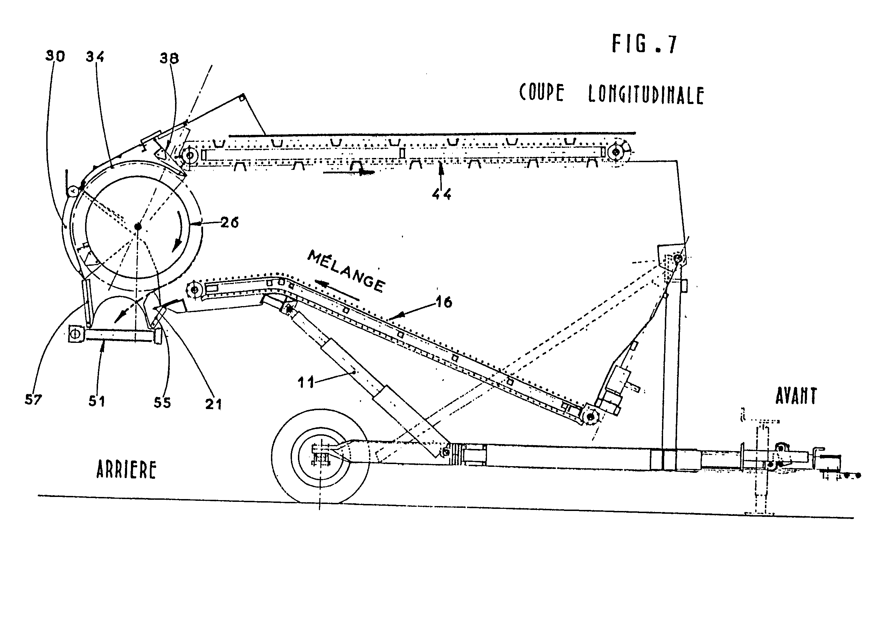

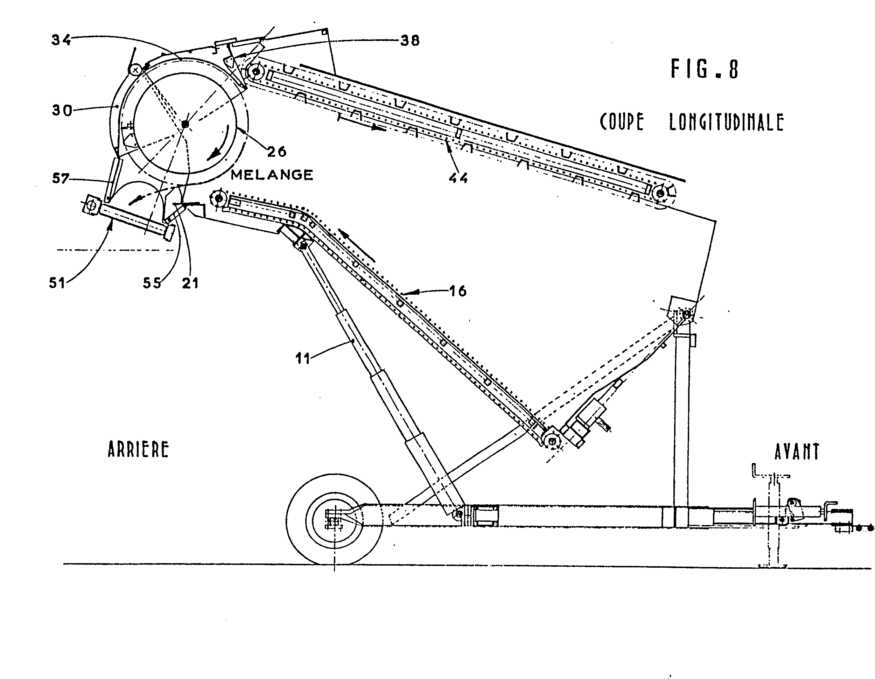

Il reste seulement alors à distribuer cette nourriture aux animaux. Pour celà, on donne à la machine la configuration de la Fig. 7 (et Fig. 8). Le volet 34 est relevé à fond, entraînant au passage l'escamotage du contre-couteau 38, la coquille 30 pivote à fond vers l'arrière, vient au contact du volet 34 escamoté, dégageant une ouverture à la partie basse de la fraise, entre la coquille 30 et la raclette réglable 21. Le tapis transversal 51 est abaissé en position travail, le volet articulé 55 ferme l'ouverture sous la raclette réglable 21 et le volet articulé 57 est relevé pour obturer l'ouverture arrière sous la coquille 30. La fraise 26 est entraînée dans le sens d'horloge (suivant la flèche, machine vue conformément au dessin), le tapis inférieur 16 mis en mouvement vers l'arrière (sens de la flèche) et le tapis supérieur 44 entraîné vers l'avant (sens de la flèche). On longe les mangeoires avec la machine tirée et entraînée par un tracteur, la masse de nourriture est entraînée par le tapis 16 vers la fraise 26 qui l'émiette et la projette sur le tapis transversal 51. Celui-ci la déverse sur la côte de la machine, dans les auges des animaux, ou dans des trémies de grande hauteur (Fig. 8), tandis que le tapis supérieur 44 régule à une épaisseur constante la masse de nourriture qui avance vers la fraise, ce qui permet d'assurer un débit uniforme et régulier pendant presque toute la durée de la distribution.

La machine, objet de l'invention, peut, à elle seule, dans une exploitation d'élevage de moyenne importance, de production bovine ou ovine principalement, résoudre les problèmes de chargement, préparation, distribution des aliments en réalisant la mécanisation de la chaîne d'alimentation, depuis le silo et autres réserves de nourriture, jusqu'à la mangeoire de l'animal. Avec elle, une seule personne peut, sans gros effort physique, en utilisant seulement un petit tracteur de service, alimenter en un voyage un troupeau de l'ordre de trente bovins ou trois cents ovins, au moyen d'une ration de base la mieux equilibrée possible, préparée à partir des divers produits fourragers récoltés et stockés sur l'exploitation, principalement les fourrages ensilés (herbe ou maïs) complémentés avec des fourrages fibreux (foin ou paille), en cossettes (pulpes de betteraves) granulés ou en farines (tourteaux, céréales). En plus des travaux pour lesquels elle est conçue, soit: dessilage-mélange de compléments-distribution du produit préparé, elle peut être utilisée en période d'été, en enlevant le tapis supérieur, en rehaussant les côtés de la benne et en équipant l'arrière d'un petit tapis disposé verticalement, comme remorque d'ensilage (avec éparpillement mécanique sur le silo) et comme remorque d'affourragement journalier. C'est une machine polyvalente, utilisable presque toute l'année, qui remplace avantageusement plusieurs machines étroitement spécialisées, pour un investissement global moins élevé.

### Revendications

1. Remorque Dessileuse Mélangeuse Distributrice, utilisable avec un tracteur agricole, animée par la prise de force et le circuit hydraulique de celui-ci, destinée à dessiler mécaniquement une quantité de fourrage (herbe, maïs, pulpe ou autres), directement dans le silo de type extérieur, à charger ce silage également mécaniquement (simultanément au dessilage), à recevoir ensuite une certaine quantité de foin aux brins longs (ou paille ou autre) en le hachant au passage, à mélanger d'un façon homogène tous les produits présents ou introduits dans la benne de la remorque, à distribuer mécaniquement ce mélange ainsi préparé soit dans les mangeoires des animaux, soit dans des trémies d'alimentation de grande capacité, fixes ou mobiles, parfois de hauteur importante, et comprenant.

— Un châssis (1) de forme, vue en plan, similaire à la lettre A, muni de roues à pneumatiques, d'une flèche d'attelage pour tracteur agricole avec une béquille escamotable (10), de deux poteaux avant verticaux (3) avec traverse de liaison et deux bras obliques (5) de senfant munis de marches d'escalier,

— Une benne (12) portée par le chassis et de largeur constante et de profondeur variable sur sa longueur, composée de deux flasques latéraux (13) de forme appropriée, d'un fond (14) muni d'un tapis roulant (16), d'une traverse (18) en fer U placée sous le fond vers l'arrière avec, de même vers l'extrémité, arrière du fond, une traverse en cornière inégale, équipée d'une raclette réglable (21), d'un jeu de traverses (22) a l'avant servant de support du mécanisme de prise de force, d'une traverse ronde (23) destinée au pivotement de la benne sur ses paliers (4) supportés par les poteaux avant (3) de chassis, une paroi avant, une paroi arrière cintrée, servant à la fois d'entretoise et de capot, cette benne constituant le corps de la machine et l'organe de stockage de celle-ci;

— Un vérin hydraulique (11), à simple effet, télescopique, destiné à régler la hauteur de la partie arrière de la benne (12), s'appuyant sur le chassis et supportant la benne par la traverse (18),

— Une fraise cylindrique (26) à axe horizontal, fixée par ses paliers sur l'arrière de la benne (12) et munie de couteaux tranchants (22) et de palettes souples;

— Une coquille mobile (30), composée d'une tôle cintrée (31) épousant en partie la circonférence de travail de la fraise (26), fixée entre deux flasques la reliant à des paliers, qui sont disposés concentriquement à l'axe (29) de rotation de la fraise (26), cette coquille recevant et guidant jusque dans la benne (12) le silage arraché et entraîné par la fraise (26);

— Une porte de visite (43), prolongeant une paroi arrière (25) cintrée de la benne (12), au dessus de la fraise (26);

— Un plancher supérieur (48) situé au-dessus et sur la majeure partie de la benne et, servant de plateforme pour l'introduction des ingrédients;

— Un capotage (49) sur un orifice d'introduction (50) situé au dessus et legèrement en avant de la fraise entre la paroi arrière avec sa porte de visite et le plancher supérieur (48);

— Un tapis transversal (51) à proximité de la fraise (26) permettant le déchargement latéral du fourrage prémélangé, lors de la distribution avec des volets (55) et (57) le bordant pour empêcher les projections extérieures lors de la distribution;

— Un ensemble de transmissions mécaniques, animées à partir de la prise de force du tracteur, destinées à assurer l'entraînement de toutes les pièces mobiles, dans le sens voulu et avec la vitesse désirée pour chaque fonction (dessilage, mélange, distribution);

caractérisé par le fait que cet ensemble de principes connus est complété par des éléments suivants, en combinaison:

— Un moyen sous la forme d'une bavette souple (32) bordant la coquille oscillante (30) et lui permettant d'épouser la forme du silo, en compensant de petits défauts de perpendicularité de la remorque par rapport au front de taille, afin de limiter les pertes de silage entre le silo et la machine;

— Un moyen (34) pivotant au tour de l'axe de la fraise, pour le capotage de la fraise (26) lors de l'introduction du foin, afin que celui-ci soit canalisé, en complément de la coquille (30) et de la paroi arrière (25), jusque dans la benne (12), lors de son entraînement par la fraise (26);

— Un moyen (38) de déchiquage du foin au niveau de l'orifice d'introduction (50) du foin, en conjugaison avec la rotation de la fraise (26) dans le sens approprié, ce moyen pouvant s'escamoter lors de la montée du moyer (34) au dessus de la fraise;

— Un moyen (44) de ramener vers l'avant de la benne (12) les produits projetés vers le haut par la fraise (26), ce moyen étant disposé sur le dessus de la benne (12) mais en dessous du plancher superieure (45), de manière à recouvrir la benne sur une partie majeure de sa longueur;

— Un moyen d'escamoter le tapis transversal (51) de déchargement latéral, pendant les opérations de dessilage et de mélange, en l'amenant au dessus de la paroi arrière (25) de la fraise (26) de manière qu'il n'accroche pas, dans le mouvement de descente de la partie arrière de la benne (12), la masse de silage laissée en place par le travail de dessilage de la fraise (26);

— Un moyen d'inverser le sens de rotation de la fraise (26) de manière que celle-ci puisse tourner dans un sens déterminé pour les opérations de dessilage et de mélange, et en sens inverse pour l'opération de distribution.

2. Dispositif suivant revendication 1, permettant sur un silo de grande hauteur, de ne pas creuser exagérément le front de taille, de manière à éviter les éboulements, caractérisé par le fait que l'axe (23) d'articulation de la benne (12) sur le châssis (1) se trouve situé à une grande hauteur par rapport au sol, étant disposé à l'extrêmité de deux poteaux (3) disposés verticalement à la jonction du châssis avec sa flèche d'attelage (6), ces deux poteaux étant étayés par deux bras obliques (5).

3. Dispositif suivant revendication 1 caractérisé par le fait que le fond (14) de la benne (12) ainsi que son tapis roulant (16) présentent un dos d'âne (15) dans le sens longitudinal, situé au niveau de l'essieu (8) du châssis (1), lorsque la benne (12) est abaissée à fond.

4. Dispositif suivant revendication 1, caractérisé par le fait que le moyen de permettre à la coquille mobile (30) d'épouser la forme du silo en forme de bavette souple (32) est fixé sur un tube (33) solidaire de la coquille (30) et lui servant de renfort, la bavette (32) pouvant s'enrouler sur ledit tube et sa longueur développée étant telle que, dans cette position enroulée, la fraise (26) ne puisse l'accrocher et la déchiqueter.

5. Dispositif suivant revendication 1, caractérisé par le fait que le moyen pivotant pour le capotage de la fraise (26) est un volet (34) constitué par une tôle cintrée (35) épousant en partie la forme de la fraise (26), fixée entre deux flasques la reliant à ses paliers, ceux-ci étant disposés concentriquement à l'axe (29) de rotation de la fraise (26), l'ensemble étant raidi par un fer carré (36) et une cornière (37).

6. Dispositif suivant revendication 1, caractérisé par le fait que le moyen de déchiqueter le foin est un contre couteau (38) escamotable, constitué par une cornière (39) portant des couteaux tranchants (42), soudée sur un rond (40) réalisant l'articulation de l'ensemble contre-couteau sur les flasques de la benne (12) et complété par deux lames (41) aux extrêmités, lames qui sont repoussées par le volet (34) lors de sa montée, entraînant ainsi l'escamotage de l'ensemble du contre couteau (38), et dégageant ainsi la place nécessaire pour le passage du volet (34) lors de sa montée.

7. Dispositif suivant revendication 1, caractérisé par le fait que le moyen de ramener vers l'avant de la benne (12) les produits projetés vers le haut par la fraise (26) est un tapis roulant (44) recouvrant la benne (12) sur la majeure partie de sa longueur, composé de pignons à chaînes, de chaînes mécaniques reliées entre elles par des barres (46) très rapprochées, et complété par des raclettes (47) munies de griffes, disposées à intervalles réguliers.

8. Dispositif suivant revendication 1, caractérisé par le fait que le moyen d'escamoter le tapis transversal (51), en l'amenant au dessus de la paroi arrière (25) de la fraise (26) est constitué par deux flasques (53), fixés sur l'ossature (52) du tapis transversal (51) et la reliant à ses deux paliers, qui sont disposés concentriquement à l'axe (29) de rotation de la fraise (26).

9. Dispositif suivant revendication 1, dans lequel la fraise (26) assure à elle seule les fonctions de dessilage, de mélange, de distribution, caractérisé par le fait que la transmission animant la fraise est munie d'un dispositif inverseur du sens de marche, de nature mécanique ou hydraulique.

10. Dispositif suivant revendication 1, dont le tapis roulant (16) équipant le fond (14) de la benne (12) est capable de réaliser le transport dans le sens montant de la masse de silage lorsque la benne (12) est très inclinée, caractérisé par le fait que le tapis (16) est composé de pignons à chaînes, et de chaînes mécaniques reliées entre elles par des barres (17) très rapprochées.

**Claims**

1. A Silo Unloader Mixing Distributing Trailer, usable with an agricalatural tractor, set in

motion by the power take-off and the hydraulic circuit of said tractor, designed for desiling mechanically a quantity of fodder (grass, corn, pulp or others) directly in the silo of outer type, for loading said silage fodder also mechanically (simultaneously with the desiling), for receiving thereafter a certain quantity of fodder with long blades (or straw or other) by chopping it on the way, for mixing homogeneously all the products present and introduced in the trailer bucket, for distributing mechanically said mixture thus prepared either to the bunk feeders of the animals, or in large capacity, fixed or mobile feeding hoppers of sometimes great height, and comprising:

— a frame (1) having a shape, seen in a plane, similar to letter A, equipped with pneumatic wheels, a coupling hitch for an agricultural tractor, a retractable crotch (10), two front vertical posts (3) having a connecting crossbeam and two reinforcement oblique arms (5) provided with steps, and

— a bucket (12) carried by the frame and of constant length and variable depth over its length, composed of two side flanges (13) of appropriate shape, a bottom (14) provided with a conveyor belt (16), a U-iron crossbeam (18) placed on the bottom rearwardly, with also to the rearward end of the bottom an unequal angle crossbeam, equipped with a settable scraper (21), a set of crossbeams (22) in the front used as support for the power take-off mechanism, a round crossbeam (23) for pivoting the bucket on its bearings (4) supported by the frame front posts (3), a front wall, a curved rear wall, used simultaneously as crossbeam and hood, said bucket forming the body of the machine and the storing member of said machine;

— a hydraulic jack (11), single-acting, telescopic, for regulating the height of the rear portion of bucket (12), bearing on the frame and supporting the bucket via the crossbeam (18);

— a cylindrical milling cutter (26) with horizontal axis, fixed via its bearings on the rear portion of bucket (12) and provided with sharp cutters (22) and flexible pallets;

— a mobile shell (30) composed of a curved cloth (31) matching partly the working circumference of the milling cutter (26), fixed between two flanges connecting it to bearings, disposed concentric to the rotation axis (29) of milling cutter (26), said shell receiving and guiding the silage fodder torn out and entrained by the milling cutter (26) into bucket (12);

— an inspection window (43) prolongating a rear curved wall (25) of bucket (12) above milling cutter (26);

— an upper floor (48) situated above and on the major portion of the bucket and serving as platform for the introduction of the ingredients;

— a cowling (49) on a feeding orifice (50) formed above and slightly frontwardly of the milling cutter, between the rear wall with its inspection window and the upper floor (48);

— a transverse conveyor band (51) proximate the milling cutter (26) for the side discharge of the pre-mixed fodder, during distribution, with flaps (55) and (57) bordering it for preventing outer projections during distribution;

— a unit of mechanical transmissions, set in motion by the tractor power take-off, for providing the driving of all the mobile parts, in the required direction and at the required speed for each function (desiling, mixing, distribution);

characterized by the fact that this set of known principles is completed by the following elements, in combination:

— a means in the form of a flexible flap (32) bordering the oscillating shell (30) and allowing it to match the silo shape, by accommodating the small faults of perpendicularity of the trailer with respect to the working face, in order to limit the silage losses between silo and machine;

— a means (34) pivoting about the milling cutter axis for the cowling of the milling cutter (26) during introduction of the fodder, so that said fodder be canalized, in addition to shell (30) and the rear wall (25), up to bucket (12), when driven by the milling cutter (26);

— a means (38) for shredding the fodder at the level of the feeding orifice (50) for said fodder, in conjunction with the rotation of the milling cutter (26) in the appropriate direction, said means being retractable when the means (34) moves above the milling cutter;

— a means (44) for bringing back the products projected upwardly by the milling cutter (26) to the front of bucket (12), said means being disposed on the top of bucket (12), but below the upper floor (48), so as to cover the bucket on a major portion of its length;

— a means for retracting the transverse side discharge conveyor belt (51) during the desiling and mixing operations, by bringing it above the rear wall (25) of the milling cutter (26) so that it does not catch, during the downward motion of the rear portion of bucket (12) the silage mass left on the spot during the desiling work of the milling cutter (26);

— a means for reversing the rotation direction of the milling cutter (26) so that said cutter can rotate in a determined direction for the desiling and mixing operations and in a reverse direction for the distribution operation.

2. A device according to claim 1, allowing not to dig excessively into the working face of a silo of great height, in order to avoid downfalls, wherein the articulation axis (23) of bucket (12) on frame (1) is situated at a great height with respect to the ground, being disposed at the end of two posts (3) placed vertically at the junction of the frame with its coupling hitch (6), said two posts being stayed by two oblique arms (5).

3. A device according to claim 1, wherein the bottom (14) of bucket (12) as well as its conveyor belt (16) form a hump (15) in the longitudinal direction, at the level of axle (8) of frame (1), when bucket (12) is completely brought down.

4. A device according to claim 1, wherein the means for allowing the mobile shell (30) to match the shape of the silo, in the form of a flexible flap (32), if fixed to a tube (33) rigidly connected to shell (30) and being a reinforcement thereof, whereby flap (32) can be wound around said tube, and its developed length being such that in said wound-up position the milling cutter (26) cannot catch it and shred it to pieces.

5. A device according to claim 1, wherein the pivoting means for the cowling of the milling cutter (26) is a flap (34) formed of a curved metal sheet (35) matching in part the shape of the milling cutter (26), fixed between two flanges connecting it to its bearings, said bearings being disposed concentrically to the rotation axis (29) of milling cutter (26), the assembly being stiffened by a square iron (36) and an angle iron (37).

6. A device according to claim 1, wherein the means for shredding the fodder is a retractable counter-cutter (38) formed of an angle piece (39) carrying sharp cutters (42), welded onto a round bar (40) forming the articulation of the counter-cutter unit on the flanges of bucket (12) and completed by two blades (41) at the ends, which blades are thrust back by flap (34) when moving upwardly, thereby providing the retraction of the counter-cutter unit (38) and thereby clearing the space necessary for the passage of flap (34) when moving upwardly.

7. A device according to claim 1, wherein the means for bringing back the products projected upwardly by the milling cutter (26) to the front of bucket (12) is a conveyor belt (44) covering bucket (12) on a portion of its length, formed of chain pinions, of mechanical chains connected to each other by bars (46) very close to each other, and completed by scrapers (47) formed with claws placed at regular intervals.

8. A device according to claim 1, wherein the means for retracting the transverse conveyor belt (51), by bringing it above the rear wall (25) of milling cutter (26) is formed of two flanges (53), fixed on the framework (52) of the transverse conveyor belt (51) and connecting it to its two bearings which are placed concentrically to the rotation axis (29) of milling cutter (26).

9. A device according to claim 1, in which the milling cutter (26) provides as such and on its own the desiling, mixing, distribution functions, wherein the transmission which sets the milling cutter in motion is equipped with a reversing device of the direction of motion, of mechanical or hydraulic nature.

10. A device according to claim 1, whose conveyor belt (16) which fits out the bottom (14) of bucket (12) is adapted for the transportation in the upward direction of the silage mass when bucket (12) is strongly inclined, wherein belt (16) is composed of chain pinions and mechanical chains connected to each other by bars (17) very close to each other.

**Patentansprüche**

1. Zerkleinerungs/Misch-Anhänger, in Verbindung mit einem landwirtschaftlichen Traktor einsetzbar, angetrieben durch den Nebenabtrieb und die Hydraulikleitung dieses Abtriebes, zur mechanischen Zerkleinerung einer bestimmten Futtermenge (Grünfutter, Mais, Schnitzel bzw. andere Stoffe), direkt an dem Außensilo, wobei diese zerkleinerten Stoffe ebenfalls mechanisch (gleichzeitig mit der Zerkleinerung) befördert werden, wobei anschließend eine bestimmte Menge langes Heu (bzw. Stroh oder andere Stoffe) mitgeschnitten und mit allen im Hänger befindlichen bzw. eingeführten Stoffen homogen gemischt werden, wobei das auf diese Weise hergestellte Gemisch mechanisch entweder in Futtertröge überführt oder in große Aufnahmetrichter, feststehend bzw. beweglich und teilweise großer Höhe eingeführt wird, mit

— einem Chassis (1), das in der Draufsicht mit dem Buchstaben A vergleichbar ist, mit Luftbereifung ausgerüstet, mit einer Kupplungsanordnung für landwirtschaftliche Traktoren, mit einem ausfahrbaren Ständer (10) mit zwei vorderen vertikalen Streben (3), mit Verbindungstraverse und zwei schrägen Verstärkungsarmen (5), mit Stufen,
— mit einem vom Chassis getragenen Wagenkasten (12) gleichmäßiger Breite und in der Länge veränderlicher Tiefe, bestehend aus zwei Seitenflanschen (13) entsprechender Form, einem Boden (14), mit Transportwand (16), einer Traverse (18) in U-Form, am unteren hinteren Teil befindlich, desgleichen am hinteren Ende des Bodens, eine unregelmäßige Ecktraverse, ausgerüstet mit einem verstellbaren Abstreifer (21), einem Satz Traversen (22) am vorderen Teil als Auflage des Mechanismus des Nebenantriebes mit einer runden Traverse (23) für die Schwenkbewegung des Wagenkastens auf den Lagern (4) die von den vorderen Streben (3) des Chassis gehalten werden, mit einer vorderen Wandung, einer gebogenen hinteren Wandung, die gleichzeitig als Zwischensteg und Abdeckung dient, wobei dieser Wagenkasten den Körper der Maschine und das Lagerorgan letzterer bildet;

— eine einfach wirkende, teleskopische hydraulische Winde (11) zur Höheneinstellung des hinteren Teiles des Wagenkastens (12), die am Chassis aufliegt und den Wagenkasten über die Traverse (18) trägt;

— eine zylinderförmige Fräse (26) mit horizontaler Achse, an ihren Lagern am hinteren Teil des Wagenkastens (12) befestigt und mit Schneidmessern (22) und Rollen ausgerüstet;

— eine bewegliche Schalenanordnung (30), bestehend aus einem gebogenen Blech (31), das teilweise die Form der Arbeitsfläche der Fräse (26) besitzt, zwischen zwei Flanschen befestigt und mit Lagern verbunden, die konzentrisch zur Drehachse (29) der Fräse (26) angeordnet sind, wobei diese Schalenanordnung das gemähte und über die Fräse (26) erfaßte Futter in den Wagenkasten (12) führt;

— mit einer Wartungsöffnung (43), die sich in der hinteren Wandung (25) des Wagenkastens (12) oberhalb der Fräse (26) befindet;

— mit einem oberen Boden (48) oberhalb und auf dem größten Teil des Wagenkastens liegend und als Plattform zur Einführung der Futtermittel dienend;

— mit einer Abdeckung (49) an einer Einführöffnung (50) am beren Teil und etwas vor der Fräse gelegen, zwischen der hinteren Wandung und der Inspektionsklappe sowie dem oberen Boden (48);

— einen Quertransportband (51) in Nähe der Fräse (26) zur seitlichen Zuladung des vorgemischten Futters bei der Verteilung, mit Klappen (55) und (57) zur Verhinderung eines Herabfallens bei der Verteilung;

— mit einer mechanischen Übertragungseinheit, über den Nebenabtrieb des Traktors angetrieben, für den Antrieb aller beweglichen Teile in gewünschter Richtung und mit der für jede Funktion erforderlichen Geschwindigkeit (Zerkleinern, Mischen, Verteilung);

dadurch gekennzeichnet, daß diese ihren Prinzipien nach bekannte Einheit durch folgende Elemente in Kombination vervollständigt wird:

— Eine Vorrichtung in Form einer beweglichen Klappe (32) die die in Schwingung befindlichet Schalenanordnung (30) begrenzt und sich somit der Form des Silos annähert, wobei kleine Abweichungen der Senkrechten des Anhängers gegenüber dem Vorderteil ausgeglichen werden, um Transportverluste zwischen dem Silo und der Maschine zu verringern;

— eine um die Achse der Fräse schwenkbare Vorrichtung (34) zur Abdeckung der Fräse (26) bei der Einführung des Heus, mit dem Ziel, letzteres zwischen der Schalenanordnung (30) und der hinteren Wandung (25) bis zum Wagenkasten (12) während des Antriebes durch die Fräse (26) zu führen;

— eine Vorrichtung (38) zur Heuzerkleinerung in Höhe der Einführöffnung (50) für das Heu, in Verbindung mit der Drehbewegung der Fräse (26) in entsprechender Richtung, wobei diese Vorrichtung bei der Hubbewegung der Vorrichtung (34) über die Fräse angehoben werden kann;

— eine Vorrichtung (44), um die durch die Fräse (26) nach oben geförderten Stoffe vor den Wagenkasten (12) zurückzuführen, wobei diese Vorrichtung über dem Wagenkasten (12), jedoch unterhalb des oberen Bodens (48) in der Form angeordnet ist, daß der Wagenkasten auf dem Großteil seiner Länge abgedeckt wird;

— eine Vorrichtung zum Ausfahren des Quertransportbandes (51) zur seitlichen Entladung während den Zerkleinerungs und Mischvorgängen, wobei eine Führung über die hintere Wandung (25) der Fräse (26) in der Form erfolgt, daß während der Abwärtsbewegung des hinteren Teiles des Wagenkastens (12) die durch die Fräse (26) zerkleinerte Masse nicht ungefördert zurückbleibt;

— eine Vorrichtung zur Umkehr der Drehbewegung der Fräse (26) in der Form, daß die Fräse für die Vorgänge der Zerkleinerung und der Mischung in einer bestimmten Richtung drehen kann, darüber hinaus in Gegenrichtung für den Vorgang der Verteilung.

2. Anhänger nach Anspruch 1, die es bei einem Silo großer Höhe ermöglicht, die Aufnahmeseite nicht übermäßig zu öffnen, um ein Zusammenstürzen zu vermeiden, dadurch gekennzeichnet, daß die Gelenkasche (23) des Wagenkastens (12) auf dem Chassis (1) sich in großer Höhe gegenüber dem Boden und am Ende von zwei Streben (3) befindet, die vertikal zur Verbindung des Chassis mit der Kupplung (6) angeordnet sind, wobei diese beiden Streben durch zwei Schrägstreben (5) versteift sind.

3. Anhänger nach Anspruch 1, dadurch gekennzeichnet, daß der Boden (14) des Wagenkastens (12) sowie die Transportauflage (16) einen Ablaufrücken (15) in Längsrichtung in Höhe der Achse (8) des Chassis (1) bilden, wenn der Wagenkasten (12) abgesenkt ist.

4. Anhänger nach Anspruch 1, dadurch gekennzeichnet, daß die Siloförmige bewegliche Schalenanordnung (30) mit veränderlicher Auflage (32) an einem Rohr (33) befestigt ist, das kraftschlüssig mit der Schalenanordnung (30) verbunden ist und ihr als Verstärkung dient, wobei die Aufnahme (32) sich an das Rohr anlegen kann und die abgewickelte Länge in dieser Stellung so bemessen ist, daß die Fräse (26) ausgekuppelt ist und somit eine Zerkleinerung unterbrochen wird.

5. Anhänger nach Anspruch 1, dadurch gekennzeichnet, daß die Schwenkvorrichtung zur Abdeckung der Fräse (26) durch eine Klappe (34) gebildet wird, die ein gebogenes Blech (35) umfaßt, das teilweise die Form der Fräse (26) besitzt, und zwischen zwei Flanschen auf Lagern befestigt ist, die konzentrisch zur Drehachse (29) der Fräse (26) angeordnet sind, wobei die gesamte Einheit durch ein Winkeleisen (36) und einen Winkel (37) verstärkt ist.

6. Anhänger nach Anspruch 1, dadurch gekennzeichnet, daß die Zerkleinerungsvorrichtung für das Heu durch ein ausfahrbares Doppelmesser (38) gebildet wird, bestehend aus einem Winkel (39), der die Schneidmesser (42) trägt, die auf ein Rundeisen (40) aufgeschweißt sind, das die Gelenkverbindung der Messereinheit mit den Flanschen des Wagenkastens (12) bildet, und mit zwei Klingen (41) an den Endpunkten, wobei diese Klingen durch die Klappe (34) bei der Aufwärtsbewegung zurückgedrückt werden und somit das Ausfahren der Messereinheit (38) bewirken und somit den erforderlichen Platz für den Durchlauf der Klappe (34) bei der Aufwärtsbewegung freigeben.

7. Anhänger nach Anspruch 1, dadurch gekennzeichnet, daß die Vorrichtung zur Aufwärtsbewegung der von der Fräse (26) nach oben beförderten Schnitzel zum Vorderteil des Wagenkastens (12) durch ein Transportband (44) gebildet wird, das den Wagenkasten (12) auf seiner größten Länge umgibt, wobei dieses Transportband aus Kettenrädern, untereinander über sehr nahe gelegene Rollen (46) verbundene mechanische Ketten besteht, vervollständigt durch Abstreifer (47) mit in regelmäßigen Abständen angeordneten Greifelementen.

8. Anhänger nach Anspruch 1, dadurch gekennzeichnet, daß die Vorrichtung zum Ausfahren des Quertransportbandes (51) über die hintere Wandung (25) der Fräse (26) durch zwei Flanschteile (53) gebildet wird, die an der Halterung (52) des Quertransportbandes (51) befestigt sind, mit Verbindung zu zwei Lagern, die konzentrisch zur Drehachse (29) der Fräse (26) angeordnet sind.

9. Anhänger nach Anspruch 1, bei der die Fräse (26) ausschließlich die Funktionen der Zerkleinerung, des Mischens und der Verteilung übernimmt, dadurch gekennzeichnet, daß der Antrieb der Fräse mit einer Drehrichtungsumkehr-Vorrichtung mechanischer bzw. hydraulischer Art ausgerüstet ist.

10. Anhänger nach Anspruch 1, bei der die Transportvorrichtung (16) am Boden (14) des Wagenkastens (12) einen Transport in aufsteigender Richtung für die Zerkleinerungsprodukte übernehmen kann, wenn der Wagenkasten (12) stark geneigt ist, dadurch gekennzeichnet, daß das Transportband (16) aus Kettenrädern besteht, kombiniert mit mechanischen Ketten, die untereinander durch sehr nahe gelegene Lageranordnungen (17) verbunden sind.

FIG.1
COUPE LONGITUDINALE

AVANT

ARRIERE

F

0046718

**0 046 718**

# FIG. 2

VUE SUIVANT **F** DE LA FIG.1

FIG.3

COUPE LONGITUDINALE

0046718

FIG. 4

COUPE LONGITUDINALE

FIG. 5

COUPE LONGITUDINALE

SILAGE

SILO

ARRIERE

AVANT

0046718

FIG.6

COUPE LONGITUDINALE

FIG.7

COUPE LONGITUDINALE

AVANT

ARRIERE

MÉLANGE

44

16

11

26

38

34

30

21

55

51

57

FIG.8

COUPE LONGITUDINALE

34

38

30

26

MELANGE

57

44

51

55 21

16

11

ARRIERE

AVANT

0046718